# DEMANDE DE BREVET EUROPEEN

(11) **EP 4 209 321 A1**
(43) Date de publication de la demande: **12.07.2023**
(21) Numéro de dépôt: 22150745.2
(22) Date de dépôt: 10.01.2022
(51) Int. Cl.: B29C 45/06, B29C 48/00, B29C 48/06, B29C 48/255, B29C 48/25, B29C 48/30

(54) **DISPOSITIF D'EXTRUSION**

(71) Demandeur: Aisapack Holding SA, 1896 Vouvry (CH)
(72) Inventeur: CORDIER, Laurent, 08400 Liry (FR); HAMM, Benoit, 51000 Châlons-en-Champagne (FR); HERMANT, Etienne, 51000 Châlons-en-Champagne (FR); MASSEY, Jean-Manuel, 51360 Prunay (FR); SENEUZE, Francky, 51460 Courtisols (FR)
(74) Mandataire: Grosfillier, Philippe

(57) **Abrégé**

Le dispositif pour la mise en œuvre du procédé comprend une extrudeuse (10) alimentée par une matière, au moins un premier vérin (11) et un deuxième vérin (12), au moins un premier moule (13) et un deuxième moule (13'), un circuit (14) reliant l'extrudeuse aux vérins et les vérins aux moules, et des moyens d'extraction (18, 19, 19') de l'objet moulé.

## Description

### DOMAINE TECHNIQUE

L'invention se rapporte à un dispositif (également dénommé "machine d'extrusion" ci-dessous) et à un procédé pour transformer une matière synthétique thermoplastique, par exemple mais de façon non-limitative des matières synthétiques thermoplastiques non triées de différentes sources diverses, en un objet (dénommé également "article") 2D ou 3D, dans lesquels la matière synthétique est soumise à une opération de mélangeage dans un fourreau comprenant un organe à vis, est rendue fluide, est moulée, est refroidie dans le moule et est extraite de ce moule sous forme d'objet. L'invention concerne également un produit obtenu par le procédé décrit dans la présente demande.

Un dispositif d'extrusion est illustré par exemple dans la demande de brevet FR 2 428 518.

### SOMMAIRE DE L'INVENTION

Un but de l'invention est d'améliorer les dispositifs et procédés connus.

Un autre but de la présente invention est de proposer un dispositif et un procédé de fabrication d'articles ou d'objets par exemple mais non-exclusivement à partir de matières synthétiques. Typiquement, mais de façon non-exclusive, la matière utilisée pour alimenter l'extrudeuse comprend des broyés et/ou des granulés et/ou des paillettes. L'utilisation de l'une ou l'autres de ces expressions pour définir la matière première utilisée est équivalente et non limitatives dans le cadre de la présente demande.

Plus particulièrement, l'un des buts de la présente invention est notamment de proposer un procédé et un dispositif qui permettent un fonctionnement continu et la fabrication sans interruption d'objets dans un moule. Dans un dispositif d'extrusion, comme celui de la présente invention, il est important que la matière extrudée conserve un flux permanent malgré le fait que le flux alimente des moules successifs et que lors du changement de moule l'extrusion puisse se poursuivre, car un arrêt peut par exemple boucher le dispositif et engendre des pertes de temps. On cherche donc à optimiser les temps de cycles, à éviter les interruptions chronophages et néfastes pour le fonctionnement du dispositif.

Dans le cadre de la présente invention et selon des modes d'exécution de celle-ci, on a développé une unité de production permettant de fournir un débit de matière extrudée constant

L'unité de production selon l'invention permet d'utiliser des paillettes qui en vrac présentent une faible densité (généralement appelée densité apparente ou densité en vrac). Pour alimenter des paillettes dans l'extrudeuse, l'unité de production est équipée de préférence d'un système de forçage ayant plusieurs fonctions :
- Alimentation des paillettes dans l'extrudeuse (qui ne s'écoulent pas sous l'effet de la gravité)
- Augmentation de la densité apparente des paillettes par compactage afin de garantir un débit élevé et constant.

Grâce au système de forçage, des paillettes de densité apparente inférieure à 0,3 peuvent être utilisées pour fabriquer des objets dont la densité est généralement comprise entre 0,8 et 2.

Le dispositif selon l'invention dans un mode d'exécution permet de doser indépendamment plusieurs sources de matières, ce qui permet d'ajuster les propriétés de l'objet fabriqué. Selon un mode de réalisation, le dispositif d'alimentation se compose de plusieurs systèmes d'alimentation couplés à des équipements de pesage qui définissent le pourcentage des différentes sources de matières. Les paillettes issues de différentes sources sont ensuite mélangées puis compactées dans le système de forçage avant d'être alimentées dans l'extrudeuse.

Le dispositif selon l'invention permet également l'ajout de fibres en quantité contrôlée conjointement aux paillettes issues des sources choisies afin d'augmenter la rigidité des pièces produites par le dispositif. Cet ajout dans l'unité de production peut se faire dans l'extrudeuse en entrée de la vis ou alternativement en milieu ou en bout de vis. Les fibres sont par exemple des fibres de verre, des fibres végétales (chanvre etc.) fibres de coton ou une autre matière équivalente etc.

Dans le cadre de la présente invention, on a développé une unité de production permettant de maintenir sous pression contrôlée la matière extrudée afin d'éviter un dégazage incontrôlé dans la vis d'extrusion, dans les vérins d'injection transfert ou dans les canaux d'alimentation. Ainsi, selon la présente invention, le dispositif permet d'éviter le dégazage de la matière extrudée, ou alternativement d'effectuer un dégazage partiel ou total de la matière extrudée.

Dans le cadre de la présente invention, on utilise de préférence deux vérins d'injection transfert reliés à l'extrudeuse par un canal d'alimentation et associés à un système de clapet pour transformer le flux de matière continu fourni par l'extrudeuse en un flux discontinu de matière fondue injectée dans les moules. Selon l'invention, les deux vérins travaillent en alternance ; le premier vérin injectant la matière dans le moule pendant que le second se remplit et vice versa.

Dans le cadre de la présente invention, on alimente un moule à la fois, chaque moule étant rempli par un même et unique canal d'alimentation ce qui limite la stagnation de matière fondue dans les canaux d'alimentation. L'invention se caractérise notamment par des moules mobiles disposés sur un système rotatif de type barillet ou carrousel. Dans le cadre de l'invention, les moules sont de préférence refroidis par immersion dans une cuve pleine d'eau (ou d'un autre liquide approprié) dont la température est régulée. L'invention permet d'utiliser des moules peu complexes, faciles à produire, et par conséquent de faible coût.

Dans le cadre de la présente invention, les moules coulissent sur une plaque de distribution comprenant au moins un orifice pour l'injection ("point d'injection") et un orifice pour l'éjection de l'objet moulé. Pendant le refroidissement de l'objet dans la cavité du moule, la plaque de distribution maintient la cavité fermée. Plus précisément et comme il sera expliqué plus en détail dans la description ci-dessous, la plaque de distribution forme à la fois l'ouverture d'un moule lors de l'injection de matière, la fermeture des moules lors la phase de refroidissement et à nouveau l'ouverture d'un moule pour l'éjection de l'objet moulé.

On présente ainsi un point d'injection unique pour tous les moules au lieu d'une injection individuelle pour chaque moule. On met aussi à disposition un unique moyen fermeture (à savoir la plaque de distribution) pour tous les moules en phase de refroidissement au lieu d'un moyen de fermeture individuel pour chaque moule.

L'invention sera mieux comprise suite à la description de plusieurs modes d'exécution de celle-ci et des figures annexées à la présente demande illustrant le procédé et la machine.

Dans des modes d'exécution, l'invention concerne un dispositif pour le moulage d'objets 2D ou 3D, le dispositif comprenant au moins une extrudeuse alimentant un premier vérin et un deuxième vérin, un barillet rotatif comprenant une pluralité de moules, le dispositif comprenant en outre une plaque de distribution fixe par rapport au barillet et commune à tous les moules et ayant un point d'injection pour alimenter un moule et un orifice d'éjection pour extraire un objet moulé d'une moule, les vérins remplissant alternativement un moule du barillet par le point d'injection, le barillet étant déplacé en rotation d'un pas indexé lorsque le moule est rempli, les moules étant fermés de façon étanche par la plaque de distribution entre la position d'injection et la position d'extraction de l'objet formé.

Dans des modes d'exécution, les moules situés entre le point d'injection et l'orifice d'éjection et fermés par la plaque de distribution sont de préférence refroidis dans une zone de refroidissement.

Dans des modes d'exécution, les moules sont refroidis par immersion dans un bain de liquide.

Dans des modes d'exécution, la partie de la plaque de distribution située dans la zone de refroidissement est refroidie.

Dans des modes d'exécution, l'orifice d'injection est lié aux vérins par un canal d'alimentation.

Dans des modes d'exécution, une buse à obturation ferme le canal d'alimentation pendant la rotation du barillet.

Dans des modes d'exécution, les vérins sont alimentés par l'extrudeuse de préférence à fonctionnement ininterrompu.

Dans des modes d'exécution, l'extrudeuse comprend au moins une vis à rotation constante.

Dans des modes d'exécution, l'extrudeuse comprend au moins une zone de décompression, la zone étant utilisée de préférence pour retirer l'humidité du produit et/ou insérer des fibres ou des charges dans la matière extrudée.

Dans des modes d'exécution, le dispositif comprend un éjecteur associé à chaque moule.

Dans des modes d'exécution, la position de l'éjecteur est utilisée pour mesurer le taux de remplissage du moule.

Dans des modes d'exécution, le dispositif comprend un système de forçage pour densifier la matière introduite dans l'extrudeuse.

Dans des modes d'exécution, la pression d'injection est abaissée approximativement à 100 bar après l'injection lors de la rotation du barillet par rapport à la plaque de distribution.

Dans des modes d'exécution , l'invention concerne un procédé de fabrication d'objets 2D ou 3D dans lequel on met en œuvre les étapes suivantes:
-) on fournit de la matière à partir d'une ou plusieurs sources sous forme de paillettes, la proportion de matière en fonction de sa source étant prédéterminée, par exemple en fonction de l'objet qui est fabriqué;
-) les paillettes sont mélangées, de préférence compactées, et ensuite introduites dans une extrudeuse;
-) optionnellement, on ajoute une matière, comme des fibres, à l'entrée de l'extrudeuse et/ou en milieu de vis et/ou en bout de vis;
-) on extrude la matière;
-) on introduit la matière extrudée dans un premier vérin d'injection d'une paire de vérins d'injection travaillant en alternance;
-) on injecte la matière à partir d'un deuxième vérin d'injection de ladite paire de vérins d'injection dans un moule mobile disposé dans un système rotatif à plusieurs moules, à travers un point d'injection traversant une plaque de distribution fixe par rapport au système rotatif;
-) on ferme le moule par rotation dudit système rotatif au moyen de la plaque de distribution sur laquelle glisse ledit système;
-) on refroidit les moules du système rotatif pendant la rotation dudit système;
-) on extrait un objet moulé par un point d'extraction traversant la plaque de distribution.

Dans des modes d'exécution , l'invention concerne un objet 2D ou 3D obtenu par le procédé et le dispositif tels que décrits dans la présente demande.

### BREVE DESCRIPTION DES DESSINS

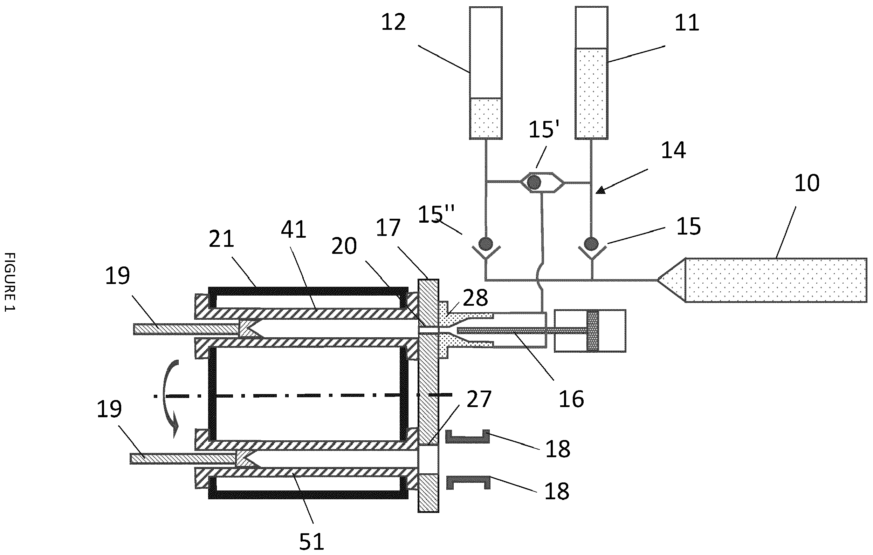

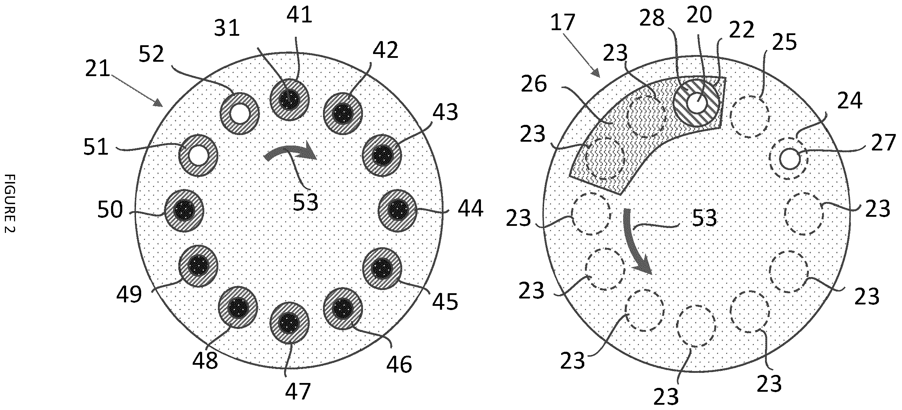

Les figures 1 et 2 illustrent de façon schématique le dispositif.

La figure 1 illustre le dispositif dans son ensemble et la figure 2 illustre une vue du barillet et de la plaque de distribution de chaque côté de la plaque de distribution .

### Références numériques

- 10:: extrudeuse
- 11:: vérin d'injection
- 12:: vérin d'injection
- 14:: circuit
- 15:: clapet
- 15':: clapet
- 15":: clapet
- 16 :: obturateur
- 17 :: plaque de distribution
- 18 :: extracteur
- 19 :: piston éjecteur
- 20:: orifice d'injection
- 21:: barillet
- 22:: position d'injection
- 23:: position de refroidissement
- 24:: position d'éjection
- 25:: position intermédiaire
- 26:: zone critique
- 27:: orifice d'éjection
- 28:: buse d'injection
- 31:: Matière injectée
- 41 à 52 :: moules
- 41:: moule en position d'injection
- 42 - 50:: moules en position de refroidissement
- 51:: moule en position d'éjection
- 52:: moule en position intermédiaire
- 53:: sens de rotation du barillet

### DESCRIPTION DETAILLEE

L'invention permet de doser la matière première sous forme de paillettes provenant de différentes sources, d'incorporer des charges tels que des fibres et in fine d'obtenir un mélange homogène et compacté de densité supérieur à 0,6 et de préférence supérieur à 0,8. Ainsi, l'unité de production selon l'invention permet l'utilisation et le mélange de matières de différentes sources conditionnées en vrac sous forme de paillettes. Chaque source peut se caractériser par un niveau de propreté, un taux de résine thermoplastique, un taux de charge etc. En combinant les matières de plusieurs sources, et avec l'ajout éventuel d'additifs ou de charges les propriétés finales de l'objet réalisé par le procédé selon l'invention peuvent être optimisées (rigidité, résistance aux chocs, vieillissement).

L'unité de production selon l'invention présente en amont de l'extrudeuse, des moyens de dosage appropriés aux différentes sources de matières, des moyens pour obtenir un mélange homogène, et enfin des moyens de gavage du mélange afin d'augmenter la densité apparente des paillettes à l'entrée de l'extrudeuse.

Un dispositif de dosage préférentiel se compose d'un tapis convoyeur équipé de moyens de pesage et d'un mélangeur. Une précision de pesage inférieure à 3% est obtenue et de préférence inférieure à 1%. Un contrôle précis de la formulation est ainsi obtenu. Les moyens de dosage comprennent également un système de filtration permettant de séparer des éléments en acier de diamètre supérieur à 2mm et de préférence supérieurs à 1mm qui pourraient détériorer les vis d'extrusion ou bloquer les clapets. Le système de filtration est de préférence magnétique.

Un exemple de dispositif de dosage alternatif est une unité de dosage gravimétrique à batch sur trémie. Ce type de système permet le dosage de 4 sources de matière(s) et présente une précision de dosage inférieur à 3% et préférentiellement inférieure à 1%. Cependant, l'écoulement de la matière dans les trémies est parfois limité par le facteur de forme des paillettes ce qui limite l'utilisation de ces dispositifs.

Le dispositif selon l'invention comprend préférentiellement un équipement mélangeur de type trémie, ou silo mélangeur, à pale, à hélice ou à vis. Cet équipement permet également de disperser des charges tels que des fibres ou charges minérales qui auraient été ajoutées. Alternativement, l'équipement mélangeur est un mélangeur à bande ou à ruban. L'élément mélangeur permet d'obtenir un mélange homogène des paillettes issues de différentes sources de matières, ainsi que des charges tels que des fibres de verre, de chanvre ou autre matériau.

L'élément mélangeur est connecté à un dispositif de gavage permettant d'augmenter la densité apparente du mélange de matières sous forme de paillettes. Le dispositif de gavage est de préférence équipé d'une vis « de forçage » qui compacte la matière à l'entrée de l'extrudeuse.

Selon un premier mode de réalisation de l'invention, qui est le mode préférentiel, les fonctions de dosage, de mélange et de gavage sont réalisées par trois dispositifs différents mis en série.

Selon un second mode de réalisation de l'invention, les fonctions de mélange et de gavage sont réalisées par un seul dispositif.

Selon un troisième mode de réalisation de l'invention, les fonctions de dosage et de mélange sont réalisées par un seul dispositif.

Selon un quatrième mode de réalisation de l'invention, les fonctions de dosage, de mélange et de gavage sont réalisées par un seul dispositif.

Optionnellement, les dispositifs de dosage, ou de mélange ou de gavage sont utilisés également pour sécher la matière.

Un aspect de l'invention est de permettre la production à cadence élevée d'objets obtenus à partir de matières broyées. Les figures 1 et 2 illustrent un dispositif à cet effet et son fonctionnement.

Le dispositif selon l'invention comprend le dispositif de dosage, mélange et gavage décrit précédemment et relié à l'extrudeuse 10 du dispositif d'extrusion illustré figure 1. Ce dispositif d'extrusion est connecté à deux vérins d'injection 11 et 12 fonctionnant en alternance, c'est-à-dire que l'un se remplit pendant que l'autre injecte la matière dans le moule et vice-versa. Un système de trois clapet 15, 15' et 15" et d'un obturateur 16 permet la rotation sans interruption de la vis et l'injection simultanée des objets. Un système de moules 41 à 52 disposés sur un barillet 21 rotatif permet la production de pièces massives avec un temps de refroidissement long sans pour autant péjorer pénaliser le débit massique des pièces produites.

Le fonctionnement détaillé du dispositif selon l'invention est décrit ci-dessous.

En figure 1, une machine selon un mode d'exécution de l'invention est illustrée. La machine comprend de préférence une extrudeuse 10 . Une telle extrudeuse permet d'avaler et de faire fondre des paillettes issues de matières d'une grande diversité de provenance, de composition, de forme et de propreté ; de mieux malaxer la matière pour la rendre le plus homogène possible, elle ne dégrade pas les charges et ajouts de type fibre de verre et elle ne dégrade pas les charges type fibre naturelle par exemple ajoutée en fin de plastification. Une telle extrudeuse peut comporter des zones de décompression pour dégazer en partie ou totalement la matière, ou pour incorporer des additifs tels que des charges minérales comme des fibres ou du talc, ou tels que des colorants ou tels que des antioxydants ou tels que des agents glissants ou de démoulage ou tels que des agents de polymérisation ou réticulation. L'extrudeuse 10 permet d'obtenir un fort débit de matière.

Le profil de vis est adapté pour transformer des produits avec des particules solides. Le cisaillement de ces vis est limité pour éviter la dégradation des fibres.

La machine comprend donc le premier vérin d'injection 11 et le deuxième vérin d'injection 12 pour injecter la matière dans les moules 41-52 au travers d'un circuit 14 comprenant les clapets 15, 15', 15" de fermeture. Le dispositif comporte un nombre de moules 41-52 disposés sur le barillet 21 supérieur à 4 et de préférence supérieur à 6. Selon l'invention, le nombre de moules sur le barillet 21 est optimisé en fonction du débit maximal de l'extrudeuse et du temps de refroidissement de l'objet. Ainsi le nombre de moules sur le barillet 21 est optimisé pour produire au débit massique optimal de l'installation. Ainsi l'invention permet de produire à débit massique sensiblement constant quel que soit le volume de l'objet fabriqué.

Le système de trois clapets 15, 15' et 15" permet le fonctionnement en tandem des vérins d'injection 11 et 12 conjointement à la rotation continue de la vis d'extrusion délivrant un débit constant. Les clapets 15 et 15" selon l'invention sont des clapets simple effet laissant respectivement passer la matière fondue uniquement dans le sens de l'extrudeuse vers le vérin d'injection 11 ou 12 associé. Le clapet 15' selon l'invention est un vérin double effet laissant passer la matière fondue uniquement dans le sens du vérin d'injection 11 vers le moule dans une première position, et uniquement dans le sens vérin d'injection 12 vers le moule dans une seconde position. Selon un mode préférentiel de réalisation de l'invention illustré figure 1, les clapets 15, 15' et 15" sont pilotés par la pression relative générée par l'extrudeuse 10; le vérin 11 et le vérin 12. Ainsi, lorsque la pression générée par le vérin 11 est supérieure à la pression générée par l'extrudeuse 10 qui est supérieure à la pression générée par le vérin 12 ; alors le clapet 15" s'ouvre et le clapet 15 se ferme et le clapet 15' laisse passer vers le moule la matière venant du vérin 11. Ainsi, cette configuration de pression provoque un premier écoulement de matière depuis l'extrudeuse 10 vers le vérin 12 (remplissage du vérin 12) et également un second écoulement de matière si l'obturateur 16 est ouvert depuis le vérin 11 vers le moule 13 (remplissage du moule). Une configuration symétrique est obtenue quand la pression générée par le vérin 12 est supérieure à la pression générée par l'extrudeuse 10 qui est supérieure à la pression générée par le vérin 11. Dans ce cas de figure, le vérin 11 se remplit tandis que le vérin 12 injecte la matière dans le moule. Le pilotage en pression des clapets 15, 15', 15" est avantageux car très robuste et permettant l'écoulement de matière très chargée et hétérogène au niveau de la dimension des charges. De préférence, les clapets 15, 15' et 15" sont du type clapet à bille.

Un dispositif alternatif consiste à utiliser des clapets 15 et 15" pilotés à l'ouverture comme des clapets à piston.

L'obturateur 16 permet de relier le dispositif d'injection à la cavité du moule lorsque le moule est en position d'injection. Inversement, lorsque le moule est en phase de mouvement du fait de la rotation du barillet, l'obturateur 16 est fermé et isole le canal d'injection du barillet en mouvement.

La plaque de distribution 17 est une partie fixe du dispositif qui assure la transition entre la partie chaude de la machine (dispositif d'injection) et la partie froide (barillet avec les moules). Selon l'invention, les moules 41-52 glissent sur la plaque de distribution 17 lors de la rotation du barillet 21. Ainsi, selon la position angulaire d'un moule par rapport à la plaque de distribution, ce moule se trouve successivement en position d'injection (la plaque de distribution présente un orifice pour le passage de la matière par le point d'injection 20) ; puis en position de refroidissement (la plaque de distribution obstrue le point d'injection 20 et ferme la cavité du moule); puis en position d'éjection (la plaque de distribution présente un orifice pour l'éjection de l'objet moulé en forme de profilé). Ces différentes fonctions de la plaque de distribution 17 sont rendues possibles par le fait que la plaque de distribution 17 est fixe et que c'est donc la rotation du barillet 21 qui va disposer un moule au bon endroit pour l'injection, le refroidissement ou l'extraction de l'objet moulé.

De préférence, la plaque de distribution 17 subit un traitement de surface pour conserver une dureté superficielle et permettre un glissement du barillet 21. Le traitement peut par exemple être une trempe, une nitruration etc. ou un autre traitement équivalent

En conséquence, selon des modes d'exécution de la présente invention, on définit les pressions notamment entre la plaque de distribution 17 et le barillet 21 qui permettront d'une part une injection sans bavure de la matière et en même temps qui permettront une rotation relative entre la plaque de distribution 17 et le barillet 21 sans que de la matière ne s'échappe du moule 41 rempli. Des exemples non-limitatifs sont donnés ci-dessous.

Les moules selon l'invention sont disposés dans un barillet 21 de préférence rempli d'eau. Ainsi, on peut avoir par exemple douze moules 41-52 disposés dans le barillet. A chaque rotation d'1/12 de tour du barillet 21, un moule se trouve en position d'injection, un moule se trouve en position d'éjection et les dix autres moules se trouvent en position de refroidissement. Les avantages des moules 41-52 disposés dans un barillet 21 sont multiples. Les moules 41-52 sont très simples car refroidis par immersion dans la cuve du barillet 21 (pas de circuit de refroidissement par moule). Le barillet 21 et les moules 41-52 forment un ensemble qui peut être changé très rapidement sur la machine. Le temps de changement d'un moule est par conséquent très réduit. Il est facile également d'augmenter ou diminuer le nombre de moules sur le barillet 21. Ainsi, pour des pièces deux fois plus petites, on peut disposer 24 moules au lieu de 12 dans le barillet. L'optimisation du nombre de moules dans le barillet 21 permet d'utiliser le dispositif au maximum de ses capacité d'extrusion. De préférence, on limitera donc le nombre de moules vides dans le barillet, par exemple à un moule entre l'éjection et l'injection.

La machine comprend également un extracteur 18 et des pistons éjecteur 19 pour chaque moule 41-52.

Des points différenciant les modes d'exécution de l'invention par rapport à l'état de la technique sont notamment:
-) La matière extrudée arrive par un unique point d'injection 20 qui est fixe et traverse la plaque de distribution 17. Ce sont les moules 41-52 qui se déplacent (de préférence par rotation) pour se positionner en face du point d'injection 20 pour être remplis chacun à son tour. Le nombre de moule n'est pas limité, par exemple pour être égal au nombre de vérins, mais il est indépendant. Les moules sont placés dans un barillet 21 qui tourne et place chaque moule 41-52 dudit barillet 21 successivement devant le point d'injection 20 fixe. Par cette construction, le temps de refroidissement de l'article moulé n'a pas d'influence sur la cadence de la machine et son fonctionnement peut être optimisé. Le cycle de la machine ne dépend que du temps d'injection et du temps nécessaire pour baisser la pression dans le moule et permettre la rotation du barillet 21 pour amener le prochain moule 41-52 libre devant le point d'injection 20.
-) Le moule d'injection 41-52 pour une pièce est constitué d'une partie mobile (le barillet 21 comprenant les moules 41-52 proprement dits) et d'une partie fixe (plaque de distribution 17 avec le point d'injection 20).

Selon l'invention, de préférence, la plaque de distribution 17 est refroidie ce qui permet de figer le seuil de la matière injectée 31 dans le moule et facilite le mouvement relatif entre le barillet 21 et la plaque de distribution 17.

Les moyens de refroidissement sont par exemple un circuit d'eau disposé dans la plaque de distribution sur la trajectoire effectuée par les moules.

Selon la présente invention, la position des éjecteurs 19 peut être utilisée pour mesurer le taux de remplissage des moule 41-52. En particulier, il s'avère que lorsque le moule est rempli, la pression dans le moule augmente rapidement au-delà de la pression d'injection ce qui conduit à la formation de bavures à l'entrée du moule du côté du point d'injection. En conséquence, en mesurant la position de l'éjecteur 19 on peut déterminer facilement quand le moule arrive dans un état rempli (ou au moins s'approche de cet état) et ainsi éviter une brusque augmentation de la pression dans le moule et la création desdites bavures en pilotant la pression d'injection, par exemple en arrêtant l'injection ou en diminuant la pression d'injection en fonction de l'état de remplissage.

La figure 2 illustre un exemple de couple barillet 21 - plaque de distribution 17. Dans cette figure 2, le dessin de gauche illustre la vue de la plaque de distribution du côté des moules 41-52 (côté gauche de la plaque 17 dans la figure 1) et barillet 21 et le dessin de droite la vue de la plaque de distribution 17 de l'autre côté, soit du côté de la buse d'injection 28 (côté droite de la plaque 17 dans la figure 1). La figure 2 illustre le barillet 21 comprenant douze moules (41 à 52) et illustre également la plaque de distribution 17 associée au barillet 21. La figure 23 illustre la face du barillet qui coulisse contre la face de la plaque de distribution. La flèche 53 indique le sens de rotation du barillet 21 par rapport à la plaque de distribution 17 qui est fixe.

Le moule 41 du barillet est illustré en position d'injection, c'est-à-dire en face de la position 22 sur la plaque de distribution. En position 22 la plaque de distribution présente un orifice 20 qui permet le passage de la matière injectée 31, et une buse d'injection 28 qui est mise en pression contre la paroi du barillet lors du remplissage afin d'éviter une fuite de matière entre la plaque de distribution et le barillet. Selon l'invention, tous les moules 41 à 52 sont remplis par le même orifice d'injection 20.

Les moules 42 à 50 du barillet sont illustré en phase de refroidissement, c'est-à-dire en face des positions 23 sur la plaque de distribution. Dans les positions de refroidissement 23, la plaque de distribution forme conjointement la paroi de plusieurs moules (moule 42 à 50 sur la figure 2). Une autre particularité de l'invention, est liée au fait que les moules sont en mouvement relatif par rapport à la plaque de distribution 17. Ainsi les moules 41-50 selon l'invention se caractérisent par le fait que l'une de leur paroi coulisse contre la plaque de distribution 17 tout en restant étanche pendant le refroidissement de l'objet dans la cavité.

Le moule 51 du barillet est illustré figure 2 en position d'éjection 24 de la plaque de distribution illustrée figure 2. Dans cette position l'objet refroidi est retiré de la cavité par l'orifice d'éjection 27 de la plaque de distribution par l'extracteur 18. La section de l'orifice d'éjection 27 est supérieure ou égale à la section de l'objet considérée perpendiculairement à l'axe d'éjection. Selon l'invention, de préférence, tous les objets sont éjectés des moules par le même orifice 27.

Le moule 52 illustré figure 2 se trouve en position intermédiaire 25 sur la plaque de distribution 17, entre la position d'éjection 24 et celle d'injection 22. La cavité du moule 52 est vide, prête pour la prochaine injection.

Le barillet 21 est animé d'un mouvement rotatif indexé. Le pas angulaire en degré dépend du nombre de moules installé sur le barillet et est égal à 360° que divise le nombre de moule. Ainsi dans l'exemple illustré figure 2, le barillet comportant 12 moules tourne de 30 degrés à chaque pas. Ainsi lors du prochain mouvement rotatif non illustré, le moule 41 passera en position de refroidissement 23, le moule 50 passera en position d'éjection 24, le moule 51 en position intermédiaire 25 et le moule 52 passera en position d'injection 22.

Comme on le comprend des figures décrites, l'un des intérêts d'utiliser les deux vérins 11, 12 est que lorsque la machine est en production, le système fonctionne sans interruption, malgré un changement de moule: pendant que l'un des vérins se vide en remplissant un moule, l'autre vérin se remplit en vue de prochain moule à remplir, et quand on change de moule, on change de vérin pour l'alimentation. La machine fonctionne ainsi de façon continue sans pertes de temps.

De plus, la machine n'est pas limitée à douze moules d'injection comme illustré à titre d'exemple dans les figures et elle peut en comprendre plus ou moins de douze dans un barillet 21. Par exemple la machine peut comprendre huit moules, voire vingt-quatre moules dans un barillet 21.

Parmi des avantages de la machine, on note en particulier:
On peut utiliser une vis de forçage pour remplir l'extrudeuse 10. Cette vis permet d'augmenter la densité de la matière et garantit un débit extrudeuse plus important.

On remplit chaque moule de manière indépendante.

Les pièces injectées selon le procédé sont finies (pas d'opération complémentaire).

Les clapets 15, 15', 15" permettent de faire tourner l'extrudeuse avec une pression faible et d'injecter le produit avec une pression élevée.

Le moule n'est pas fermé du côté de l'injection. C'est dans un 1^{er} temps l'obturateur 16 qui ferme le moule puis le moule est fermé par la plaque de distribution 17 lors de la rotation du barillet 21.

Les moules se déplacent par glissement sur une paroi commune à tous les moules appelée plaque de distribution 17. Ce mouvement relatif entre les moules et la plaque de distribution 17 permet de modifier la configuration des moules selon l'opération à effectuer dans le cycle d'injection. Ainsi, la plaque de distribution 17 présente au moins les trois configurations suivantes :
- Lors de l'opération de remplissage et de compactage, la plaque de distribution 17 présente un orifice 20 pour le passage de la matière injectée 31.
- Lors de l'opération de refroidissement, la plaque de distribution 17 obture le moule.
- Lors de l'opération d'éjection de l'objet, la plaque de distribution 17 présente un orifice 27 permettant le passage de l'objet.

Selon des modes d'exécution de l'invention, celle-ci porte sur un procédé de fabrication d'objets 2D ou 3D et sur des objets obtenus par ce procédé. Dans le procédé, on met en œuvre au moins les étapes suivantes:
-) on fournit de la matière à partir d'une ou plusieurs sources sous forme de paillettes, la proportion de matière en fonction de sa source étant prédéterminée, par exemple en fonction de l'objet qui est fabriqué;
-) les paillettes sont mélangées, de préférence compactées, et ensuite introduites dans une extrudeuse;
-) optionnellement, on ajoute une matière, comme des fibres, à l'entrée de l'extrudeuse et/ou en milieu de vis et/ou en bout de vis;
-) on extrude la matière;
-) on introduit la matière extrudée dans un premier vérin d'injection d'une paire de vérins d'injection travaillant en alternance;
-) on injecte la matière à partir d'un deuxième vérin d'injection de ladite paire de vérins d'injection dans un moule mobile disposé dans un système rotatif à plusieurs moules, à travers un point d'injection traversant une plaque de distribution fixe par rapport au système rotatif;
-) on ferme le moule par rotation dudit système rotatif au moyen de la plaque de distribution sur laquelle glisse ledit système;
-) on refroidit les moules du système rotatif pendant la rotation dudit système;
-) on extrait un objet moulé par un point d'extraction traversant la plaque de distribution.

Le système comprend par exemple un barillet avec plusieurs moules, de sorte qu'à chaque rotation du barillet d'un pas (le pas dépend du nombre de moules), un moule se trouve en position d'injection, un moule se trouve en position d'éjection (ou extraction) de l'objet et la majorité si ce n'est la totalité des autres moules se trouvent en position de refroidissement. Dans certaines configurations, il est possible qu'un moule (au moins) reste vide pendant un ou plusieurs pas de rotation du barillet, en fonction de la distance entre les positions d'injection et d'extraction et du pas de rotation. Un tel moule est donc vide après l'extraction et ne se remplit que lorsqu'il atteint la position d'injection.

Parmi les avantages du procédé, on note le fait que le temps de cycle est divisé par un facteur de l'ordre de 15 par rapport aux procédés connus pour des pièces massives.

Un autre avantage du procédé est le fait que les pièces produites présentent un bel aspect de surface, lisse et sans retassures.

Les modes d'exécution décrits dans la présente demande le sont à titre d'exemples illustratifs et ne doivent pas être considérés comme limitatifs. D'autres modes d'exécution peuvent faire appel à des moyens équivalents à ceux décrits par exemple. Les modes d'exécution peuvent également être combinés entre eux en fonction des circonstances, ou des moyens utilisés dans un mode peuvent être utilisés dans un autre mode. Par exemple, les matières premières utilisées peuvent être des matières principalement à base de polyoléfine mélangées avec d'autres matériaux. La part de plastique est de l'ordre de 90 à 40% en volume environ et de préférence on n'effectue pas de tri préalable de la matière broyée. L'extrudeuse peut être une extrudeuse bi-vis (p.ex. à double vis contrarotative) ou une autre extrudeuse appropriée.

## Revendications

1. Dispositif pour le moulage d'objets 2D ou 3D, ledit dispositif comprenant au moins une extrudeuse (10) alimentant un premier vérin (11) et un deuxième vérin (12), un barillet (21) rotatif comprenant une pluralité de moules (41-52), ledit dispositif comprenant en outre une plaque de distribution (17) fixe par rapport au barillet et commune à tous les moules et ayant un point d'injection (20) pour alimenter un moule et un orifice d'éjection (27) pour extraire un objet moulé d'une moule, lesdits vérins remplissant alternativement un moule (41-52) du barillet (21) par ledit point d'injection (20), ledit barillet étant déplacé en rotation d'un pas indexé lorsque ledit moule est rempli, lesdits moules étant fermés de façon étanche par la plaque de distribution (17) entre la position d'injection et la position d'extraction de l'objet formé.

2. Dispositif selon la revendication 1, les moules situés entre le point d'injection et l'orifice d'éjection et fermés par la plaque de distribution (17) sont refroidis dans une zone de refroidissement.

3. Dispositif selon la revendication 1 ou 2, dans lequel les moules sont refroidis par immersion dans un bain de liquide.

4. Dispositif selon l'une des revendications précédentes, dans lequel la partie de la plaque de distribution (17) située dans la zone de refroidissement est refroidie.

5. Dispositif selon l'une des revendications précédentes, dans lequel l'orifice d'injection est lié auxdits vérins par un canal d'alimentation.

6. Dispositif selon la revendication précédente, dans lequel une buse à obturation ferme le canal d'alimentation pendant la rotation du barillet.

7. Dispositif selon l'une des revendications précédentes, dans lequel les vérins sont alimentés par l'extrudeuse à fonctionnement ininterrompu.

8. Dispositif selon l'une des revendications précédentes, dans lequel l'extrudeuse comprend au moins une vis à rotation constante.

9. Dispositif selon l'une des revendications précédentes, dans lequel l'extrudeuse comprend au moins une zone de décompression, ladite zone étant utilisée pour retirer l'humidité du produit et/ou insérer des fibres ou des charges dans la matière extrudée.

10. Dispositif selon l'une des revendications précédentes, ledit dispositif comprenant un éjecteur (19) associé à chaque moule.

11. Dispositif selon la revendication précédente, dans lequel la position de l'éjecteur (19) est utilisée pour mesurer le taux de remplissage du moule.

12. Dispositif selon l'une des revendications précédentes, ledit dispositif comprenant un système de forçage pour densifier la matière introduite dans l'extrudeuse.

13. Dispositif selon l'une des revendications précédentes, dans lequel la pression d'injection est abaissée approximativement à 100 bar après l'injection lors de la rotation du barillet par rapport à la plaque de distribution.

14. Procédé de fabrication d'objets 2D ou 3D dans lequel on met en œuvre les étapes suivantes:
-) on fournit de la matière à partir d'une ou plusieurs sources sous forme de paillettes, la proportion de matière en fonction de sa source étant prédéterminée, par exemple en fonction de l'objet qui est fabriqué;
-) les paillettes sont mélangées, de préférence compactées, et ensuite introduites dans une extrudeuse;
-) optionnellement, on ajoute une matière, comme des fibres, à l'entrée de l'extrudeuse et/ou en milieu de vis et/ou en bout de vis;
-) on extrude la matière;
-) on introduit la matière extrudée dans un premier vérin d'injection d'une paire de vérins d'injection travaillant en alternance;
-) on injecte la matière à partir d'un deuxième vérin d'injection de ladite paire de vérins d'injection dans un moule mobile disposé dans un système rotatif à plusieurs moules, à travers un point d'injection traversant une plaque de distribution fixe par rapport au système rotatif;
-) on ferme le moule par rotation dudit système rotatif au moyen de la plaque de distribution sur laquelle glisse ledit système;
-) on refroidit les moules du système rotatif pendant la rotation dudit système;
-) on extrait un objet moulé par un point d'extraction traversant la plaque de distribution.

15. Objet 2D ou 3D obtenu par le procédé de la revendication précédente.
